# EUROPÄISCHE PATENTANMELDUNG

(11) **EP 3 889 710 A1**
(43) Veröffentlichungstag der Anmeldung: **06.10.2021**
(21) Anmeldenummer: 20166578.3
(22) Anmeldetag: 30.03.2020
(51) Int. Cl.: G05B 19/418, G05B 17/02

(54) **LEITSYSTEM EINER TECHNISCHEN ANLAGE**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)

(57) **Zusammenfassung**

Vorgeschlagen wird ein Leitsystem für eine technische Anlage, insbesondere eine Fertigungs- oder Prozessanlage, das wenigstens einen Engineering Station Server aufweist, der für eine Verwendung im Rahmen eines Engineerings der technischen Anlage ausgebildet und vorgesehen ist. Das Leitsystem ist dadurch gekennzeichnet, dass auf dem Engineering Station Server wenigstens eine erste hierarchisch strukturierte, digitale Repräsentation (2) eines ersten Teils der technischen Anlage und wenigstens eine zweite hierarchisch strukturierte, digitale Repräsentation (2) eines zweiten Teils der technischen Anlage implementiert ist, wobei der ersten hierarchisch strukturierten, digitalen Repräsentation (2) des ersten Teils der technischen Anlage ein erstes Simulationsmodell (9) und der zweiten hierarchisch strukturierten, digitalen Repräsentation (2) des zweiten Teils der technischen Anlage ein zweites Simulationsmodell (9) fest zugeordnet ist, und wobei mittels des ersten Simulationsmodells (9) ein technisches Verhalten des ersten Teils der technischen Anlage und mittels des zweiten Simulationsmodells (9) ein technisches Verhalten des zweiten Teils der technischen Anlage simulierbar ist.

## Beschreibung

Die Erfindung betrifft ein Leitsystem für eine technische Anlage, insbesondere eine Fertigungs- oder Prozessanlage, mit den Merkmalen des Anspruchs 1. Außerdem betrifft die Erfindung ein Verfahren zum Betreiben einer technischen Anlage mittels eines Leitsystems gemäß Anspruch 5.

Simulationsmodelle, die das Verhalten einer Prozessanlage oder eines Teiles dieser Anlage nachbilden, werden im Kontext eines (Prozess-)Leitsystems für die Validierung genutzt. Bei einem bestimmten Input sollen die Simulationsmodelle immer den gleichen Output zu dem bestimmten Input als Ergebnis ausgeben. Durch eine Manipulation der Simulationsmodelle können auch die zugehörigen Tests manipuliert werden.

Die Möglichkeit ist bekannt, Simulationsmodelle unter Verwendung adäquater Hilfsmittel, beispielsweise des Simulationswerkzeugs "SIMIT" der Firma SIEMENS, außerhalb des eigentlichen Leitsystems zu generieren. Auch ein Schützen dieser externen Simulationsmodelle ist bekannt und wird beispielsweise in der EP 3379351 A1 beschrieben. Die dort verwendeten Simulationsmodelle haben jedoch keine starke, d.h. nicht abstreitbare und nicht unbemerkt manipulierbare, Bindung an die jeweilige technische Anlage oder den jeweiligen Anlagenteil. Auch ist Stand heute kein Schutz gegen unberechtigtes Auslesen von besonders sensiblen daher besonders schutzwürdigen Simulationsmodellen vorhanden.

Beim computergestützten Entwurf und der späteren Optimierung des Betriebs von technischen Anlagen, insbesondere Prozessanlagen, sind in Abhängigkeit der Änderungen in bestimmten Branchen (z.B. Pharma) aufwändige Abnahme- und Zertifizierungsmaßnahmen erforderlich. Nach einer erfolgreichen Abnahme sind technischen Veränderungen - ohne dass eine erneute Abnahme notwendig wäre - Grenzen gesetzt.

Zudem existieren zum aktuellen Zeitpunkt keine automatisierten Prozesse zur Erkennung von abnahmerelevanten Veränderungen und zum darauffolgenden Anstoßen der erneuten Abnahme. Hierdurch fallen ein beträchtlicher Aufwand und damit hohe Kosten für die Zulassung einer technischen Anlage an.

Der Erfindung liegt die Aufgabe zugrunde, ein Leitsystem anzugeben, das eine reproduzierbare und gegen Manipulation gesicherte virtuelle Abnahme von technischen Anlagen bzw. Anlageteilen ermöglicht.

Diese Aufgabe wird gelöst durch ein Leitsystem für eine technische Anlage mit den Merkmalen des Anspruchs 1. Außerdem wird die Aufgabe gelöst durch ein Verfahren zum Betreiben einer technischen Anlage mittels eines Leitsystems mit den Merkmalen des Anspruchs 5. Vorteilhafte Weiterbildungen ergeben sich aus den abhängigen Ansprüchen.

Ein erfindungsgemäßes Leitsystem für eine technische Anlage, insbesondere eine Fertigungs- oder Prozessanlage, weist wenigstens einen Engineering Station Server auf, der für eine Verwendung im Rahmen eines Engineerings der technischen Anlage ausgebildet und vorgesehen ist.

Das Leitsystem ist dadurch gekennzeichnet, dass auf dem Engineering Station Server wenigstens eine erste hierarchisch strukturierte, digitale Repräsentation eines ersten Teils der technischen Anlage und wenigstens eine zweite hierarchisch strukturierte digitale Repräsentation eines zweiten Teils der technischen Anlage implementiert ist.

Dabei ist der ersten hierarchisch strukturierten, digitalen Repräsentation des ersten Teils der technischen Anlage ein erstes Simulationsmodell und der zweiten hierarchisch strukturierten, digitalen Repräsentation des zweiten Teils der technischen Anlage ein zweites Simulationsmodell fest zugeordnet.
Dabei ist mittels des ersten Simulationsmodells ein technisches Verhalten des ersten Teils der technischen Anlage und mittels des zweiten Simulationsmodells ein technisches Verhalten des zweiten Teils der technischen Anlage simulierbar.

Unter einem Leitsystem wird im vorliegenden Kontext ein computergestütztes technisches System verstanden, das Funktionalitäten zum Darstellen, Bedienen und Leiten einer technischen Anlage wie einer Fertigungs- oder Produktionsanlage umfasst. Das Leitsystem kann Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der technischen Anlage und zu einem Engineering aufweisen. Unter dem Begriff Leitsystem sind zusätzlich auch weitere Recheneinheiten für komplexere Regelungen und Systeme zur Datenspeicherung und -verarbeitung zu fassen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen können auch aus dem Bereich der Energieerzeugung kommen. Windräder, Solaranlagen oder Kraftwerke zur Energieerzeugung sind ebenso von dem Begriff der technischen Anlage umfasst.

Unter einem "Engineering Station Server" wird vorliegend ein Server verstanden, der dazu ausgebildet ist, verschiedene Hardware- und Software-Projekte für das Leitsystem der technischen Anlage zu erstellen, verwalten, archivieren und dokumentieren. Mithilfe von speziellen Software-Entwurfswerkzeugen (Englisch: Engineering Toolset) sowie vorgefertigten Bausteinen und Plänen kann mittels des Engineering Station Servers ein Zusammenspiel von leittechnischen Geräten und Einrichtungen der technischen Anlage geplant und verwaltet werden. Ein Beispiel hierfür ist ein SIMATIC Manager Server der Firma SIEMENS.

Die digitalen Repräsentationen der Anlagenteile sind hierarchisch strukturiert. Dies bedeutet, dass einzelne Komponenten der Anlagenteile wie Motoren, Pumpen, Ventile, Tanks, Sensoren oder Aktoren in einer hierarchischen Beziehung zueinanderstehen, welche in dem Engineering Station Server hinterlegt ist. Man spricht in diesem Zusammenhang auch von einer "technologischen Hierarchie". Durch die feste Zuordnung der Simulationsmodelle zu den jeweiligen Anlagenteilen können die Simulationsmodelle unmittelbar für eine Abnahme des jeweiligen Anlagenteils verwendet werden. Insbesondere bei Änderungen in der Zusammenstellung der technischen Anlage, die eine etwaige Änderung der hierarchisch strukturierten, digitalen Repräsentation der Anlagenteile bewirken, lässt sich durch Hinzuziehen des Simulationsmodells einfach und effizient beurteilen, ob eine erneute Abnahme der Anlage, genauer gesagt: des betreffenden Anlagenteils, vonnöten ist.

Bevorzugt weisen die erste hierarchisch strukturierte, digitale Repräsentation des ersten Teils der technischen Anlage und/oder die zweite hierarchisch strukturierte, digitale Repräsentation des zweiten Teils der technischen Anlage eine digitale Verplombung auf, mithilfe derer eine Authentizität der ersten und/oder zweiten hierarchisch strukturierten, digitalen Repräsentation feststellbar ist.

Für die Verplombung kann beispielsweise ein Hashwert zu den (abnahmerelevanten) hierarchisch strukturierten, digitalen Repräsentationen des jeweiligen Teils der technischen Anlage gebildet werden. Die kryptographische Bindung dieses Hashwertes an den jeweilige hierarchisch strukturierte, digitale Repräsentation kann durch das (digitale) Signieren der Datenstruktur, die sowohl den Hashwert als auch eine ID der hierarchisch strukturierten, digitalen Repräsentation beinhaltet, durch eine vertrauenswürdige Instanz (z.B. einen Auditor) gewährleistet sein. Notwendige Funktionsrechte vorausgesetzt, kann eine Instanz (z.B. ein Projekteur, ein Auditeur) die digitalen Verplombungen vergeben und dadurch den gegenwärtigen Projektierungsstand der technischen Anlage sozusagen "einfrieren". Eine einmal gebrochene Verplombung kann nicht wiederhergestellt werden - jede neue Verplombung unterscheidet sich von der vorherigen, so dass bei einem Audit oder sogar zwischen Audits zuverlässig ein Unterschied festgestellt werden kann.

Falls die Verplombung wegen einer Optimierung im jeweiligen Teil der technischen Anlage gebrochen wurde, muss geprüft werden, ob die Optimierung eine erneute Abnahme ermöglicht. Dafür kann dann auf das dem jeweiligen Teil der technischen Anlage fest zugeordnete Simulationsmodell zurückgegriffen werden. In dem Simulationsmodell sind dabei virtuell die Testfälle hinterlegt, die für eine Abnahme des jeweiligen Teils der technischen Anlage wichtig sind. Dadurch kann eine bestmögliche Vorbereitung auf die Abnahme erfolgen - auch wenn diese in Teilen auf der realen technischen Anlage erfolgen muss.

Im Rahmen einer vorteilhaften Weiterbildung der Erfindung weisen das der ersten hierarchisch strukturierten, digitalen Repräsentation des ersten Teils der technischen Anlage fest zugeordnete erste Simulationsmodell und/oder das der zweiten hierarchisch strukturierten, digitalen Repräsentation des zweiten Teils der technischen Anlage fest zugeordnete zweite Simulationsmodell eine digitale Verplombung auf, mithilfe derer eine Authentizität des ersten und/oder zweiten Simulationsmodells feststellbar ist.

Um unbemerkte Manipulationen der Simulationsmodelle auszuschließen sowie eine starke, d.h. nicht abstreitbare und nicht unbemerkt manipulierbare Bindung an die dem jeweiligen Simulationsmodell zugrunde liegende technische Anlage und/oder den dem jeweiligen Simulationsmodell zugrunde liegenden Teil der technischen Anlage zu erzielen, werden die Simulationsmodelle durch die Verplombung in vorteilhafter Weise abgesichert - unter Verwendung von adäquaten Mechanismen zur Authentifizierung sowie zum Originalitätsschutz. Durch die Verplombung wird insbesondere sichergestellt, dass durch jede an der technischen Anlage/ dem Teil der technischen Anlage vorgenommene Änderung das Aufbrechen der bestehenden Verplombung und das Veranlassen einer erneuten Verplombung durch eine dafür zuständige vertrauenswürdige (entsprechend zertifizierte und akkreditierte) Instanz "erzwungen" wird.

Besonders bevorzugt weisen das erste Simulationsmodell und/oder das zweite Simulationsmodell eine Verschlüsselung zur Verhinderung eines unberechtigten Auslesens des Simulationsmodells auf. Diese Verschlüsselung kann beispielsweise unter Verwendung eines Geheimschlüssels der Instanz erfolgen, die zuvor das Simulationsmodell mit der digitalen Verplombung versehen hat. Hierdurch wird zusätzlich zu den zuvor beschriebenen Vorteilen ein Missbrauch infolge des Auslesens des Simulationsmodells ausgeschlossen. Damit können besonders sensible und somit besonders schutzwürdige Simulationsmodelle gesichert werden.

Im Kontext von Industrial Security bieten die beschriebenen Merkmalskombinationen einen optimalen Schutz von Simulationsmodellen und den hierarchisch strukturierten, digitalen Repräsentationen der einzelnen Teile einer technischen Anlage hinsichtlich der grundlegenden Schutzziele Integrität, Authentizität und Vertraulichkeit. Überdies wird durch das erfindungsgemäße Leitsystem und die beschriebenen, vorteilhaften Weiterbildungen dazu beigetragen, dass die Simulationsmodelle ihre Originalität (d.h. dass sie von einer bestimmten, nachweisbar vertrauenswürdigen Instanz erstellt und signiert sind) beweisen können. Dadurch, dass bei jedem "Aufbrechen" einer Verplombung alle damit verbundenen Metainformationen detailliert dokumentiert werden, wird zu einem verbesserten Audit-Trail, d.h. einer verbesserten Nachvollzierbarkeit beigetragen. Des Weiteren wird eine hochqualitative (forensische) Analyse im Nachhinein zwecks der genauen Ermittlung von Problemursachen und Optimierungspotentialen ermöglicht.

Die zuvor formulierte Aufgabe wird zudem gelöst durch ein Verfahren zum Betreiben einer technischen Anlage mittels eines Leitsystems.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: ein Objektmodell eines erfindungsgemäßen Leitsystems; und
- FIG 2: eine hierarchisch strukturierte, digitale Repräsentation eines Teils einer technischen Anlage.

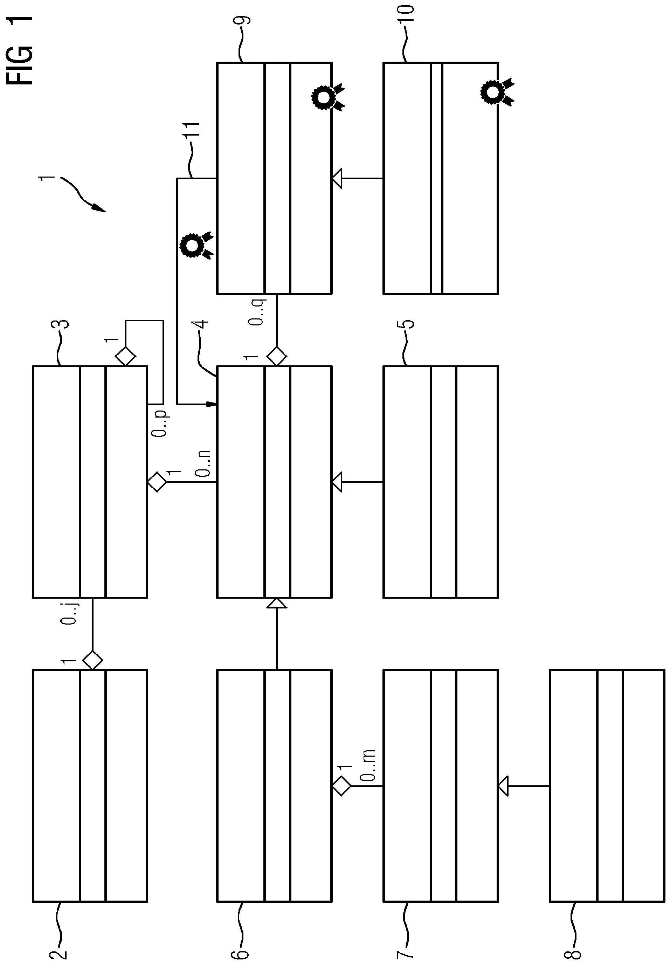

In FIG 1 ist ein Objektmodell 1 zu einer hierarchisch strukturierten, digitalen Repräsentation 2 eines (ersten) Teils einer als verfahrenstechnischen Anlage ausgebildeten technischen Anlage dargestellt. Das Objektmodell 1 ist auf einem Engineering Station Server (nicht dargestellt) eines Leitsystems der verfahrenstechnischen Anlage implementiert.

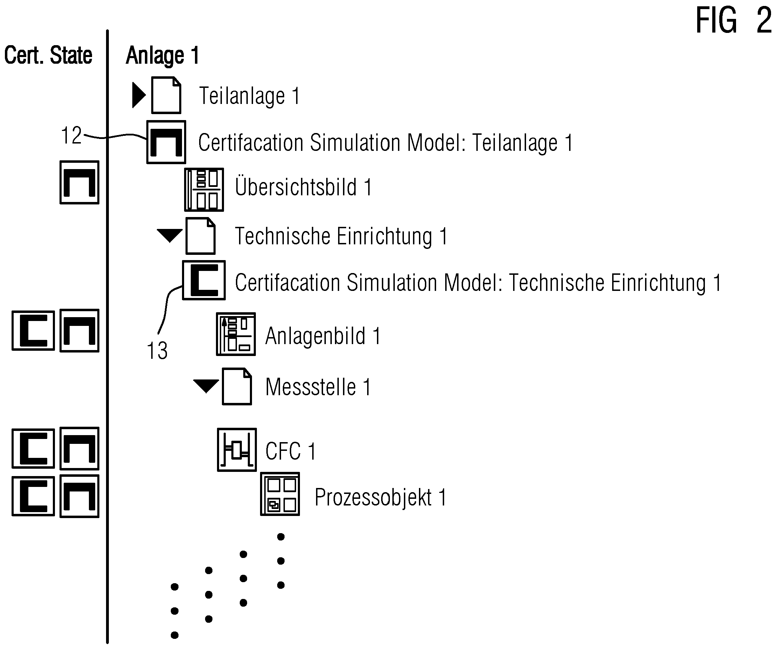

Die hierarchisch strukturierte, digitale Repräsentation 2 kann mehrere - auch ineinander verschachtelte - Strukturordner 3 zur Projektierung einer technologischen Hierarchie der verfahrenstechnischen Anlage beinhalten (z.B. "Anlage 1" → "Teilanlage 1" → "Technische Einrichtung 1" → "Messstelle 1", vgl. hierzu FIG 2).

Aus hierarchischer Sicht betrachtet, können unterhalb jedes Strukturordners 3 verschiedene Dokumente 4 angelegt sein. Bei den Dokumenten 4 kann es sich beispielsweise um Anlagenbilder 5, CFC (Continuous Function Chart) 6 oder SFC (Sequential Function Chart) handeln. Hierarchisch unterhalb des CFC 6 können weiterhin Objekte 7 angelegt sein. Ein solches Objekt 7 kann beispielsweise ein Prozessobjekt 8 sein, das einer Prozesskomponente (nicht dargestellt) der verfahrenstechnischen Anlage zugeordnet ist.

Die zuvor beschriebenen Bestandteile stellen einen gemäß dem Stand der Technik bekannten Aufbau einer hierarchisch strukturierten, digitalen Repräsentation 2 eines (ersten) Teils einer verfahrenstechnischen Anlage dar. Ein zweiter Teil der verfahrenstechnischen Anlage weist eine entsprechend ausgebildete hierarchisch strukturierte, digitale Repräsentation mit einem entsprechend ausgebildeten Objektmodell auf, die ebenfalls auf einem Engineering Station Server implementiert sind (es muss sich dabei nicht notwendigerweise um einen einzigen Engineering Station Server handeln).

Ein neu hinzugekommener Aspekt besteht darin, dass der hierarchisch strukturierten, digitalen Repräsentation 2 eines Teils der verfahrenstechnischen Anlage jeweils (d.h. beim ersten und beim zweiten Teil) ein Simulationsmodell 9 fest zugeordnet ist, wobei mittels eines ersten Simulationsmodells 9 ein technisches Verhalten des ersten Teils der verfahrenstechnischen Anlage und mittels eines zweiten Simulationsmodells 9 ein technisches Verhalten des zweiten Teils der verfahrenstechnischen Anlage simulierbar ist.

Im Objektmodell 1 stellt das Simulationsmodell 9 einen weiteren Typ eines Dokuments 4 dar. Mehrere Simulationsmodelle 9 können spezifisch auf unterschiedlichen technologischen Ebenen für den Test und die Abnahme
- einzelner Messtellen (z.B. Regelungen...)
- technischer Einrichtung (z.B. Tanks), und
- von Teilanlagen (z.B. Abfüllung...)
zugeordnet und zugewiesen werden.

Ein Simulationsmodell 9 kann eine Spezialisierung 10 mit spezifischen Eigenschaften aufweisen, die für eine reproduzierbare und gegen Manipulation gesicherte virtuelle Abnahme der einzelnen Teile der verfahrenstechnischen Anlage notwendig sind.

Eine Spezialisierung 10 kann in einer digitalen Verplombung bestehen. Durch die Verplombung kann das Simulationsmodell 9 gegen Manipulation geschützt werden, wenn dieses z.B. relevant für Abnahmen ist. Die Verplombung kann beispielsweise durch einen (entsprechend zertifizierten und akkreditierten) Auditor vorgenommen werden und beinhaltet
Informationen wie eine eindeutige Kennung der verplombenden Instanz.

Technisch kann die Verplombung wie folgt realisiert werden: Die verplombende Instanz signiert das Simulationsmodell 9 unter Verwendung seines Geheimschlüssels (engl. private key). Zur Prüfung der Integrität, Authentizität und Originalität des Simulationsmodells 9 ist anschließend der zugehörige öffentliche Schlüssel (engl. public key) notwendig. Die Bindung des öffentlichen Schlüssels an den (nur der verplombenden Instanz vorliegenden) privaten Schlüssel sowie an die Identität der verplombenden Instanz wird durch ein entsprechendes Zertifikat realisiert. Dieses Zertifikat der verplombenden Instanz, das anschließend für die Durchführung der oben beschriebenen Prüfung notwendig ist, kann beispielsweise dem Simulationsmodell 9 zugewiesen oder in einer Datenbankneben den Zertifikaten anderer vertrauenswürdiger verplombender Instanzen - hinterlegt werden.

Wird das Simulationsmodell 9 verändert oder angepasst (z.B. um eine Anlagenerweiterung vorzubereiten), kann die Verplombung gebrochen werden. In diesem Fall ist eine erneute sichere Verplombung erforderlich.

Eine weitere Spezialisierung 10 kann in einer digitalen Verplombung und einer zusätzlichen Verschlüsselung bestehen. Bei besonders sensiblen und schutzwürdigen Simulationsmodellen 9 können dieses durch die zusätzliche Verschlüsselung gegen ein Auslesen der Simulationsmodelle 9 gesichert werden. Dadurch wird beispielsweise die für das Engineering verwendete Software nicht ausschließlich auf das betreffende Simulationsmodell 9 optimiert.

FIG 1 ist zu entnehmen, dass zwischen dem Simulationsmodell 9 und der bislang bekannten hierarchisch strukturierten, digitalen Repräsentation 2, genau genommen dem Block "Objekte" 4 eine weitere Verbindung 11 besteht. Dabei handelt es sich um eine Prüfassoziation 11, die festhält, dass das betreffende Dokument 4 oder die betreffenden Dokumente (CFC 6, Anlagenbilder 5 etc.) erfolgreich durch das jeweilige Simulationsmodell 9 abgenommen worden sind. Der Prüfassoziation 11, die das jeweilige Simulationsmodell 9 und das jeweilige Objekt 4 verbindet, können dabei beispielhaft folgende Informationen zugeordnet sein:
- der Zustand der Verplombung des Simulationsmodells 9 während der Abnahme,
- der Zeitstempel in einem standardisierten Format, der eindeutig belegt, wann die Verplombung genau erfolgte,
- eine eindeutige Kennung der verplombenden Instanz,
- eine vordefinierte und "codierte" Begründung für eine erneute Verplombung,
- ggf. weitere, beispielsweise aus dem Zertifikat der verplombenden Instanz oder dem Simulationsmodell 9 entnommene Metainformationen,
- eine Signatur der verplombenden Instanz, mit der sie die Korrektheit der o.g. Inhalte der Prüfassoziation 11 bestätigt.

FIG 2 zeigt eine beispielhafte hierarchisch strukturierte, digitale Repräsentation 2 eines (ersten) Teils (mit "Teilanlage 1" bezeichnet) einer verfahrenstechnischen Anlage (mit "Anlage 1" bezeichnet). Die hierarchisch strukturierte, digitale Repräsentation 2 ist auf einem Engineering Station Server eines Leitsystems der verfahrenstechnischen Anlage implementiert. Die hierarchische Gestaltung zeigt sich in der Unterordnung der einzelnen Komponenten ("Anlage 1" → "Teilanlage 1" → "Technische Einrichtung 1" → "Messstelle 1"). Die "Technische Einrichtung 1" bildet dabei einen Strukturordner 3, wie er in FIG 1 dargestellt ist. Hierarchisch tiefer sind ein Dokument 4 "Messstelle 1" und ein weiteres Dokument 4 "CFC 1" angeordnet. Dem Dokument 4 "CFC 1" ist ein Prozessobjekt 8 "Prozessobjekt 1" hierarchisch untergeordnet.

Ein erstes Simulationsmodell 9 (mit "Certification Simulation Model: Teilanlage 1" bezeichnet) ist der "Teilanlage 1" fest zugeordnet. Ein zweites Simulationsmodell 9 (mit "Certification Simulation Model: Technische Einrichtung 1" bezeichnet) ist der "Technischen Einrichtung 1" zugeordnet. Dem ersten Simulationsmodell 9 ist in FIG 2 ein erstes Zeichen 12 zugeordnet, dem zweiten Simulationsmodell 9 ein zweites Zeichen 13. In einer Spalte "Cert. State" auf der linken Seite in FIG 2 wird symbolisiert, welche Teile der hierarchisch strukturierte, digitale Repräsentation 2 durch welches der beiden Simulationsmodelle 9 abgenommen ist. Durch das erste Simulationsmodell 9 sind die Teile "Übersichtsbild 1", "Anlagenbild 1", "CFC 1" und "Prozessobjekt 1" abgenommen. Durch das zweite Simulationsmodell 9 sind die Teile "Analgenbild 1", "CFC 1" und "Prozessobjekt 1" abgenommen.

Durch die feste Zuordnung der Simulationsmodelle 9 zu den jeweils zu verplombenden Teilen der verfahrenstechnischen Anlage, die z.B. bei der Zertifizierung verwendet worden sind, sowie in der Umsetzung der adäquaten Security-Mechanismen zum Schutz der Simulationsmodelle 9 gegen unbemerkte Manipulation und zusätzlich (bei Bedarf) gegen Auslesen, kann sichergestellt werden, dass durch jede in der Anlage vorgenommene (simulationsrelevante) Änderung eine erneute Verplombung "erzwungen" wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem für eine technische Anlage, insbesondere eine Fertigungs- oder Prozessanlage, das wenigstens einen Engineering Station Server aufweist, der für eine Verwendung im Rahmen eines Engineerings der technischen Anlage ausgebildet und vorgesehen ist,
**dadurch gekennzeichnet, dass**
auf dem Engineering Station Server wenigstens eine erste hierarchisch strukturierte, digitale Repräsentation (2) eines ersten Teils der technischen Anlage und wenigstens eine zweite hierarchisch strukturierte, digitale Repräsentation (2) eines zweiten Teils der technischen Anlage implementiert ist, wobei der ersten hierarchisch strukturierten, digitalen Repräsentation (2) des ersten Teils der technischen Anlage ein erstes Simulationsmodell (9) und der zweiten hierarchisch strukturierten, digitalen Repräsentation (2) des zweiten Teils der technischen Anlage ein zweites Simulationsmodell (9) fest zugeordnet ist,
und wobei mittels des ersten Simulationsmodells (9) ein technisches Verhalten des ersten Teils der technischen Anlage und mittels des zweiten Simulationsmodells (9) ein technisches Verhalten des zweiten Teils der technischen Anlage simulierbar ist.

2. Leitsystem nach Anspruch 1, bei dem die erste hierarchisch strukturierte, digitale Repräsentation (2) des ersten Teils der technischen Anlage und/oder die zweite hierarchisch strukturierte, digitale Repräsentation (2) des zweiten Teils der technischen Anlage eine digitale Verplombung aufweisen, mithilfe derer eine Authentizität der ersten und/oder zweiten hierarchisch strukturierten, digitalen Repräsentation (2) feststellbar ist.

3. Leitsystem nach Anspruch 2, bei dem das der ersten hierarchisch strukturierten, digitalen Repräsentation (2) des ersten Teils der technischen Anlage fest zugeordnete erste Simulationsmodell (9) und/oder das der zweiten hierarchisch strukturierten, digitalen Repräsentation (2) des zweiten Teils der technischen Anlage fest zugeordnete zweite Simulationsmodell (9) eine digitale Verplombung aufweisen, mithilfe derer eine Authentizität des ersten und/oder zweiten Simulationsmodells (9) feststellbar ist.

4. Leitsystem nach Anspruch 3, bei dem das erste Simulationsmodell (9) und/oder das zweite Simulationsmodell (9) eine Verschlüsselung zur Verhinderung eines unberechtigten Auslesens des Simulationsmodells (9) aufweisen.

5. Verfahren zum Betreiben einer technischen Anlage mittels eines Leitsystems, das gemäß einem der Ansprüche 1 bis 4 ausgebildet ist.
